# EUROPEAN PATENT APPLICATION

(11) **EP 1 847 735 A1**
(43) Date of publication of application: **24.10.2007**
(21) Application number: 06112930.0
(22) Date of filing: 21.04.2006
(51) Int. Cl.: F16J 15/10, F16J 15/06, B60J 10/00

(54) **Sealing System**

(71) Applicant: NMC S.A., 4731 Raeren/Eynatten (BE)
(72) Inventor: Meessen, Silvain, 4840 Welkenraedt (BE); Mayeres, Jean-Pierre, 4700 Eupen (BE); Job, Denis, 4031 Angleur (BE)
(74) Representative: Kihn, Pierre Emile Joseph

(57) **Abstract**

A sealing system (1) for use as sealing between one base surface and at least one opposing surface, comprising a composite sealing arrangement (21,22) having a sealing portion (21) and an attachment portion (22), and a securing arrangement to be fixed to the base surface, wherein the attachment portion (22) comprises means to detachably engage with the securing arrangement (10), wherein the sealing portion (21) is made of a thermoplastic foam material and wherein the attachment portion (22) is made of a composite material.

## Description

### Technical field

The present invention generally relates to sealings or gaskets, in particular to sealing systems used to create a tight yet non permanent connection between two or more surfaces of different objects.

### Background Art

It is well known within the art to provide articles and devices for ensuring a sealing arrangement between two or more surfaces or edges of objects differing both in shape and nature of the materials of which they are composed. Depending upon the particular type of seal which must be achieved, and the environment in which the seal will be operated, particular types of gaskets and seals have been developed to accomplish adequate sealing depending on the actual needs. To accomplish these goals, seals and gaskets for non permanent, i.e. intermittent use are generally made up of a sealing portion and attachment portion, wherein the sealing portion generally represents a strip or longitudinal profile of a flexible material and the attachment portion is applied thereto to ensure that the sealing arrangement will adhere to one of the surfaces (called base surface) and perform its sealing function when brought into contact with the second surface (called opposing surface).

Synthetic materials which are flexible and elastic are commonly used for the sealing portion to ensure thermal or acoustic insulation, air and fluid tightness, etc. The protection provided by such seals is due to their capacity to create an intimate contact without discontinuities between opposing surfaces or edges. As the opposing edges or surfaces may be non even or have an irregular shape, the flexibility and elasticity of the sealing material should be adaptable to allow for the necessary intimate contact while taking into account factors such as the extent of the deformation, the time under compressive stress, the number of compressions and releases and the intended operating conditions.

The attachment portion used to secure the sealing arrangement to the base surface is generally made of more rigid materials. The joining of both portions of the composite sealing arrangement may be effected concomitantly during extrusion (co-extrusion) or by any appropriate subsequent step (post-extrusion, gluing, welding, ...).

In fact, for the attachment to the base surface, it is often necessary or desirable to use an additional securing arrangement, which will be removably attached to the sealing arrangement, but permanently fixed to the base surface, thereby allowing the replacement of the sealing if needed. This additional securing arrangement may comprise several distinct parts to be attached on discrete locations of the base surface or preferably only one longitudinal profile. The attachment to the composite sealing arrangement may be effected through a detachable engagement e.g. via an appropriate geometrical configuration, generally complementary to that of the additional securing arrangement, thus allowing to (removably) clip them together.

The elastic portion of the composite sealing commonly comprises a hollow section made of synthetic material, such as EPDM rubber, silicone rubber, etc. The hollow configuration allows for a partial collapse of the sealing when contacting the surfaces thereby creating an intimate contact with the opposing surface.

Weather stripping is a typical application of the above-mentioned gasket arrangements for sealing a pair of surfaces. For example, weather stripping which is especially adapted for use on motor vehicles to seal the openings around doors, hood and trunk usually consists of tubular covers made of a soft material such as rubber with a hollow cross section, and attachment means adapted to secure the rubber to the door, hood or trunk of the car.

However, although conventional rubber seals are widely used to act as weather stripping, i.e. to obtain air or fluid tightness, through intimate contact of the sealing between opposing surfaces, their performances in terms of acoustic and thermal insulation are often insufficient. For example, in such conventional hollow rubber seals, the inner cavity allows the partial collapse of the sealing, thus efficiently keeping air and fluids from penetrating, but thermal insulating properties are poor because the air inside the seal may circulate freely due to thermal convection. Furthermore, acoustic properties are also not optimal due to this hollow structure.

Such rubber seals are however very resistant in terms of internal strength or cohesion and are therefore largely used for outdoor applications, i.e. applications where the sealing is at least partially exposed to adverse climatic conditions, such as for automobile body parts. In fact, a major problem in such outdoor applications is that due to ambient moisture and low temperatures the sealing may freeze to the adjacent surfaces and hence be damaged or even torn off in case the opposing surface is separated by force from the sealing, e.g. when forcibly pulling open the door of a car.

lt is also known that foams in general have superior acoustic and thermal insulation properties due to their cellular structure. Foams are therefore largely used for all kinds of thermal and acoustic insulation applications, even for different kinds of sealings. However, the major disadvantage of foams in general is their relatively poor internal strength or cohesion, which cannot resist the forces that may arise in the case mentioned above.

### Technical problem

It is an object of the present invention to provide for a sealing system exhibiting not only good air and fluid tightness, but also superior acoustic and thermal insulation properties.

This object is achieved by a sealing system as claimed in claim 1.

### General Description of the Invention

Hence, the present invention proposes a sealing system for use as sealing between one base surface and at least one opposing surface, comprising
➢ a composite sealing arrangement having a sealing portion and an attachment portion, and
➢ a securing arrangement to be fixed to the base surface,
wherein the attachment portion comprises means to detachably engage with the securing arrangement, wherein the sealing portion is made of a thermoplastic foam material and wherein the attachment portion is made of a composite material. It has to be noted that a surface in the sense of the present invention not only comprises larger areas, but also borders, edges, rims, corners, etc.

In fact, in order to overcome the above-mentioned problem, the studies made by the inventors have shown that contrary to the general opinion of the skilled persons, sealing systems based on a thermoplastic foam material may be used for outdoor applications even under adverse climatic conditions, because, although their internal cohesion is far less than the significant forces applying when forcibly tearing off the surface frozen to a wet rubber sealing, these huge forces do simply not arise when using thermoplastic foam based sealing system according to the invention. In fact, it has been found that thermoplastic foams are surprisingly less prone to attachment due to freezing than rubber type sealings.

A further advantage of the present sealing systems in addition to their attractive insulation characteristics is a significant reduction in weight, which is of particular interest in the automotive industry.

Furthermore, thermoplastic materials are less expensive than rubber type materials and their processing is generally easier, well known and controlled by the persons skilled in the art.

An additional benefit is the lack of maintenance operations required during the overall lifetime of the sealing system, as compared to rubber type gaskets which should be regularly treated e.g. with silicone oil to preserve their surface.

Hence, the sealing system is generally composed of two parts: first, a composite sealing arrangement effecting the sealing function and second, a securing arrangement which is fixed to one of the surfaces, called base surface, and which further serves to removably engage with the attachment portion of the composite sealing arrangement, thereby allowing the removal of the sealing arrangement, e.g. for replacement in case of damage.

The first part, i.e. the composite sealing arrangement, comprises a sealing portion and an attachment portion. The sealing portion is made of thermoplastic foam material, preferably comprising olefinic polymers and/or copolymers. Polymers and copolymers of ethylene and/or propylene are especially preferred.

Foams as those usable in the present invention at least during manufacturing further comprise one or more blowing agents, which may be physical blowing agents, such as gazes (alcanes, such as isobutane, etc.) added during extrusion, or chemical blowing agents freed by activation, such as azodicarbonamide, citric acid/sodium hydrogen carbonate, trihydrazinotriazine, etc.

The attachment portion is a particular portion of the sealing arrangement in that its function is to permit the detachable engagement to the second part of the system. Hence, due to the different requirements in term of rigidity, this portion is made of a composite material.

The term composite material is to be understood as comprising either one major polymeric constituent having at least two different formulations, e.g. with and without blowing agent, or at least two chemically different major polymeric constituents. In a preferred embodiment, the composite material preferably comprises a thermoplastic foam material and a different further thermoplastic material, in which case this different further thermoplastic material may also be (partially) foamed, but it should be sufficiently firm in view of its attachment function.

The further thermoplastic material, although different, preferably comprises compatible thermoplastic polymers, such as related olefinic polymers and/or copolymers, such as polymers and/or copolymers of ethylene and/or propylene.

In order to adapt the properties of the materials making up the different portions of the sealing arrangement, it may be appropriate or desirable to (partially) cross-link the (co)polymers using known methods, such as peroxide curing or using silane modified polymers. In a particularly preferred embodiment, the composite material of the attachment portion comprises a cross-linked thermoplastic polymer and/or copolymer.

Furthermore, it has been found that the composite material should have a rigidity, measured as the elastic modulus, which is at least 50%, preferably at least 100% and most preferably at least 200% higher than that of the thermoplastic foam material used for sealing portion.

In a further embodiment, the composite material has a density which is at least 25%, preferably at least 100% and most preferably at least 200% higher than that of the thermoplastic foam material.

In a still further embodiment of the invention, the thermoplastic foam material is a substantially closed-cell foam, or substantially open-cell foam which results in optimum performances depending on desired final properties like acoustical absorption, thermal insulation, flexibility.

Contrary to the rubber type sealing of the prior art, foam sealing systems do not necessarily need the presence of a hollow core to function as a sealing. Hence in a preferred embodiment, the sealing portion has a solid cross-section, i.e. no other void then the foam cells themselves. The lack of hollow structure greatly facilitates the manufacture of such seals.

A particularly advantageous aspect of the invention is the detachable engagement of the two parts of the system, which may be accomplished by any appropriate means known by the skilled person. Preferably, the detachably engaging means comprise a clip-on type arrangement wherein the securing arrangement and the attachment portion form a male-female type connection or coupling through complementary cross-sections.

The securing arrangement may be made of any appropriate thermoplastic material, e.g. such as those used for the sealing arrangement, but generally it will not be foamed as it should be sufficiently rigid to permit a strong, yet detachable connection with the attachment portion of the sealing arrangement.

It should be noted that the materials constituting the sealing system as presented above often require further ingredients known in the art. Thus, the material of the sealing portion and/or of the attachment portion further independently comprise, as needed, one or more additives, such as pigments, stabilisers, antioxidants, anti-UV agents, lubricants, cell regulators and/or flame retardants.

As mentioned above, a further aspect of the invention is the use of the present sealing systems for outdoor applications, whereby the term outdoor applications is meant to also include applications not strictly taking place outdoors but implying adverse ambient conditions, such as in cooling or refrigerating devices or plants, ventilation and air-conditioning installations, laboratory air-locks, etc.

In a particularly preferred aspect, the invention pertains to the use of such sealing systems in the automotive industry, especially for use on automobile body parts, such as doors, hood and/or trunk.

In a still further aspect, the invention provides for a process for manufacturing a composite sealing arrangement as described herein, comprising the extrusion of the sealing portion, the extrusion of the attachment portion and the joining of both portions into one composite sealing arrangement.

The joining of both sealing and attachment portions may be effected by any appropriate method known in the art, but preferably by co-extrusion in one single step.

In a further embodiment, the joining of both sealing and attachment portions is effected by any appropriate method after extrusion thereof, such as post-extrusion, gluing, thermal or sonic welding, etc.

If needed, the process comprises a further step, wherein the sealing portion and/or the attachment portion is (are) cross-linked during or after extrusion.

A further aspect of the invention pertains to a connector system for removably connecting a shaped foam article on a surface, comprising
➢ a shaped foam article having a shaped foam portion and an attachment portion, and
➢ a securing arrangement to be fixed to the surface,
wherein the attachment portion comprises means to detachably engage with the securing arrangement, wherein the shaped foam portion is made of a thermoplastic foam material and wherein the attachment portion is made of a composite material.

The materials used for the connector system are the same as those mentioned for the respective part in relation with the sealing system, except that the initial requirements for such a system may be totally different from those a sealing system must meet. Hence, variations of the above may be seen by the skilled person without departing from the present invention.

The field of use of such connector systems is quite large, as such a system allows for an easy attachment of decorative articles, etc.

The process for manufacturing such a connector system is essentially the same than that described above for the composite sealing arrangement.

### Brief Description of the Drawings

Preferred embodiments of the invention will now be described, by way of example, with reference to the accompanying drawings in which:
Fig. 1 represents an embodiment according to a preferred aspect of the invention, wherein Fig.1 a) is a cross sectional view and Fig.1 b) is a plan view of a first sealing system (1);
Fig. 2 shows an alternative embodiment according to a preferred aspect of the invention, wherein Fig.2 a) is a cross sectional view and Fig.2 b) is a plan view of a second sealing system (1).

Further details and advantages of the present invention will be apparent from the following detailed description of two not limiting embodiments with reference to the attached drawings.

### Description of Preferred Embodiments

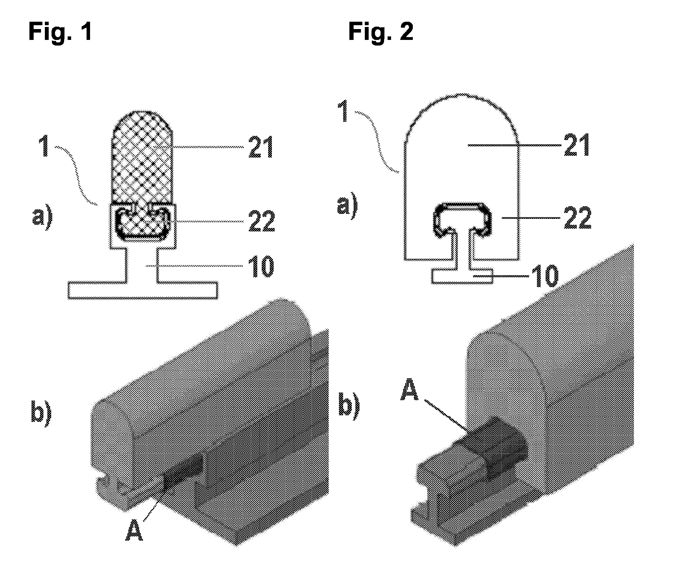

In Fig. 1 a) and 2 a), a sealing system 1 comprising a sealing arrangement 21+22 removably attached by a clip-on type connection to a securing arrangement 10 to be fixed on a base surface (not represented).

In Fig. 1 the securing arrangement 10 represents a female type connector, whereas in Fig. 2 this securing arrangement is conceived as a male type connector.

The sealing arrangement is composed of two portions: the sealing portion 21 generally representing the major portion (uppermost portion in Fig. 1) and the attachment portion 22 (lower portion in Fig. 1) having means to detachably engage with the securing arrangement 10.

As mentioned above to obtain a firm, yet detachable connection between attachment portion 22 and securing arrangement 10, the material making up the attachment portion is a composite material, which may be manufactured by co-extrusion or separate extrusion followed e.g. by a welding or gluing step. The aim of the composite material is to render at least those parts of the attachment portion 22 which will be in more or less direct contact with the securing arrangement 10 more rigid or firm.

In Fig. 1 b) and 2 b), this particular and more rigid part A of the composite material of attachment portion 22 has been emphasized for illustration purposes.

## Claims

1. A sealing system for use as sealing between one base surface and at least one opposing surface, comprising
• a composite sealing arrangement having a sealing portion and an attachment portion, and
• a securing arrangement to be fixed to the base surface,
wherein the attachment portion comprises means to detachably engage with the securing arrangement, wherein the sealing portion is made of a thermoplastic foam material and wherein the attachment portion is made of a composite material.

2. The sealing system as claimed in claim 1, wherein the composite material comprises a thermoplastic foam material and a different further thermoplastic material.

3. The sealing system as claimed in claim 1 or 2, wherein the thermoplastic material and/or the further thermoplastic material comprise(s) olefinic polymers and/or copolymers.

4. The sealing system as claimed in claim 3, wherein the thermoplastic material and/or the further thermoplastic material comprise(s) polymers and/or copolymers of ethylene and/or propylene.

5. The sealing system as claimed in any one of claims 1 to 4, wherein the thermoplastic material and/or the further thermoplastic material comprises a cross-linked thermoplastic polymer and/or copolymer.

6. The sealing system as claimed in any one of claims 1 to 5, wherein the composite material has a rigidity which is at least 50% higher than that of the thermoplastic foam material.

7. The sealing system as claimed in any one of claims 1 to 6, wherein the composite material has a density which is at least 100% higher than that of the thermoplastic foam material.

8. The sealing system as claimed in any one of claims 1 to 7, wherein the thermoplastic foam material is a substantially closed-cell foam.

9. The sealing system as claimed in any one of claims 1 to 7, wherein the thermoplastic foam material is a substantially opened-cell foam.

10. The sealing system as claimed in any one of claims 1 to 9, wherein the sealing portion has a solid cross-section.

11. The sealing system as claimed in any one of claims 1 to 10, wherein the detachably engaging means comprise a clip-on type arrangement.

12. The sealing system as claimed in any one of claims 1 to 11, wherein the material of the sealing portion and/or of the attachment portion further independently comprise one or more additives, such as pigments, stabilisers, antioxidants, anti-UV agents, lubricants, cell regulators and/or flame retardants.

13. Use of a sealing system as claimed in any of claims 1 to 12 for outdoor applications.

14. The use as claimed in claim 13, wherein the two or more surfaces pertain to automobile body parts, such as doors, hood and/or trunk.

15. A process for manufacturing a composite sealing arrangement as claimed in any of claims 1 to 12, comprising the extrusion of the sealing portion, the extrusion of the attachment portion and the joining of both portions into one composite sealing arrangement.

16. The process as claimed in claim 15, wherein the joining of both sealing and attachment portions is effected by co-extrusion in one single step.

17. The process as claimed in claim 15, wherein the joining of both sealing and attachment portions is effected by any appropriate method after extrusion thereof, such as gluing, welding, etc.

18. The process as claimed in any of claims 15 to 17, wherein the sealing portion and/or the attachment portion is (are) cross-linked during or after extrusion.

19. A connector system for removably connecting a shaped thermoplastic foam article on a surface, comprising
• a shaped foam article having a shaped foam portion and an attachment portion, and
• a securing arrangement to be fixed to the surface,
wherein the attachment portion comprises means to detachably engage with the securing arrangement, wherein the shaped foam portion is made of a thermoplastic foam material and wherein the attachment portion is made of a composite material.
